(19) Europäisches Patentamt
European Patent Office
Office européen des brevets

(11) Veröffentlichungsnummer: **0 426 028 A2**

(12) **EUROPÄISCHE PATENTANMELDUNG**

(21) Anmeldenummer: 90120571.6

(51) Int. Cl.⁵: **H04L 27/22**

(22) Anmeldetag: 26.10.90

Die Bezeichnung der Erfindung wurde geändert (Richtlinien für die Prüfung im EPA, A-III, 7.3).

(30) Priorität: 27.10.89 DE 3935911

(43) Veröffentlichungstag der Anmeldung: 08.05.91 Patentblatt 91/19

(84) Benannte Vertragsstaaten: FR GB IT SE

(71) Anmelder: **Deutsche Forschungsanstalt für Luft- und Raumfahrt e.V. Linder Höhe Postfach 90 60 58 W-5000 Köln 90(DE)**

(72) Erfinder: **Edbauer, Franz, Dr. Kleinfeldstrasse 25 W-8034 Germering(DE)**

(74) Vertreter: **von Kirschbaum, Albrecht, Dipl.-Ing. Hermann-Ehlers-Strasse 21a W-8034 Germering(DE)**

(54) **Bitdetektionsverfahren für differentiell codierte binäre oder quaternäre PSK-Signale bei differentiell-kohärenter Demodulation.**

(57) Bei einem Verfahren zur empfangsseitigen Bitdetektion von differentiell kodierten, binären oder quaternären PSK-Signalen bei differentiell-kohärenter Demodulation werden zuerst empfangene, aufbereitete Signale $(y_n)$ parallel L Symboldetektoren der Ordnung j $(j = 1,2,3..L; (L > 1))$ zugeführt. Dann werden die um j Symbolperioden verzögerten, konjugiert komplexen Signale $(y^*_{n-1}, y^*_{n-2},... Y^*_{n-L})$ und die unveränderten aufbereiteten Eingangssignale $(y_n)$ zu nicht-quantisierten Ausgangswerten $z_n^{(j)}$ der L Symboldetektoren in Multipliziergliedern multipliziert und anschließend komplex konjugiert. Anschließend werden durch Zeitglieder verzögerte, bereits detektierte, regenerierte PSK-Symbole $(\hat{a}_{n-1}, \hat{a}_{n-2},... \hat{a}_{n-L+1})$ entsprechend rückgekoppelt, und hieraus wird ein Symbol $(a_n)$ ermittelt, für welches die Summe der quadratischen Abstände $(|z_n^{(j)}-a_n\hat{a}_{n-1}\hat{a}_{n-2}....\hat{a}_{n-j+1}|^2$ mit $j = 2,3,... L$ der L Symboldetektoren ein Minimum annimmt.

EP 0 426 028 A2

## VERFAHREN ZUR EMPFANGSSEITIGEN BITDETEKTION VON DIFFERENTIELL CODIERTEN BINÄREN ODER QUATERNÄREN PSK-SIGNALEN BEI DIFFERENTIELL-KOHÄRENTER DEMODULATION

Die Erfindung bezieht sich auf ein Verfahren zur empfangsseitigen Bitdetektion von differentiell codierten binären oder quaternären PSK-Signalen (PSK - Phase Shift Keying) bei differentiell-kohärenter Demodulation. Hierbei wird unter differentiell-kohärenter Demodulation verstanden, daß für eine Phasendemodulation kein abgeleiteter Referenzträger, sondern als Phasenbezug die Phase des zuvor empfangenen Symbols benutzt wird. Dies hat den Vorteil, daß keine PLL (phase locked loop) für den Träger erforderlich ist, und daher die oft schwierige Akquisition und die Phasenregelung des Trägers entfallen.

Bei bisher angewendeten Methoden der Bitdetektion bei DPSK-Modulation wird von einem Sender, beispielsweise zur Zeit t = nT, wobei n ganzzahlig und T die Symbolperiode sind, das komplex-wertige Symbol

$$a_n = \exp(j\phi_i) \qquad (1)$$

übertragen, wobei

$$\phi_i = i2\pi/ M, \ i = 0,1,..., M\text{-}1 \qquad (2)$$

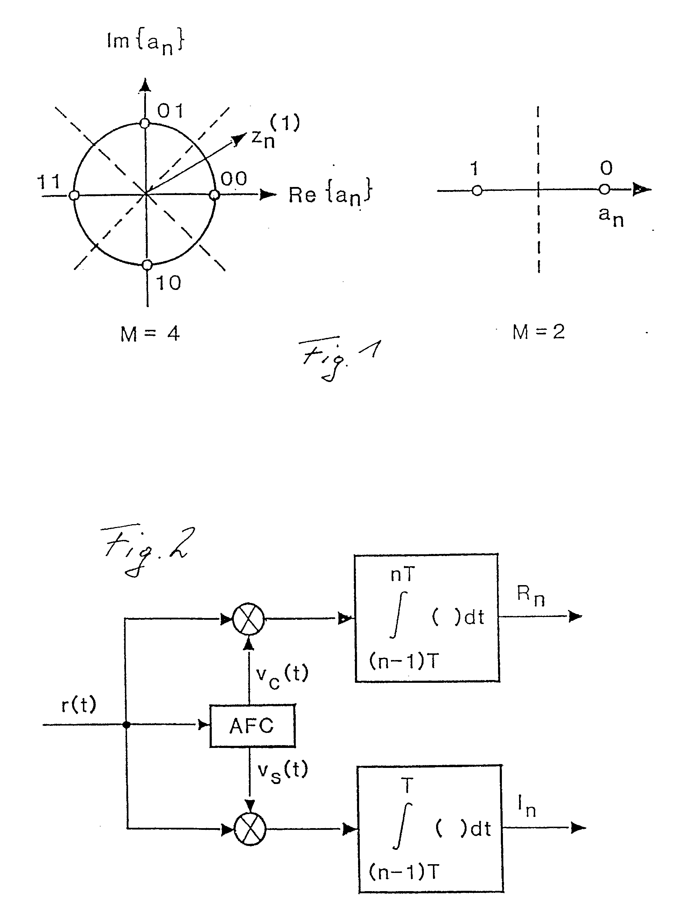

die M äquidistanten Phasenwerte des M-PSK-Signals in der komplexen Signalebene bedeuten (s. Fig. 1). Im folgenden werden nur quaternäre (M = 4) und binäre (M = 2 ) PSK-Modulation in Betracht gezogen.

Bei einer quaternären Phasenumtastung (4-DPSK) erfolgt die Zuordnung der zu übertragenen Bitpaare durch eine Gray-Codierung (s. Fig. 1). Differentielle Codierung bedeutet, daß zur Phase eines zur Zeit (n-1) übertragenen Symbols $c_{n-1}$ die Phase des Symbols $a_n$ zur Zeit n hinzukommt, so daß sich ergibt:

$$c_n = c_{n-1} a_n \qquad (3)$$

Das Sendesignal lautet dann:

$$s_n(t) = Re\{\sqrt{2S}\, c_n \exp(j2\pi f_c t)\}, \qquad (4)$$

wobei S die Signalleistung und $f_c$ die Trägerfrequenz sind.

Das Empfängereingangssignal lautet dann

$$r(t) = s_n(t) + n(t), \qquad (5)$$

wobei n(t) weißes Gauß'sches Rauschen mit einer einseitigen Geräusch-Leistungsdichte $N_o$ ist.

Das Bitenergie/Geräuschleistungsdichte-Verhältnis ist:

$$E_b/N_o = ST/[N_o ld(M)], \qquad (6)$$

wobei ld der Logarithmus zur Basis 2 ist.

Die Bitdetektion wird zweckmäßigerweise im komplexen Basisband beschrieben. Die Erzeugung des zeitdiskreten Basisbandsignals

$$y_n = R_n + jI_n \qquad (7)$$

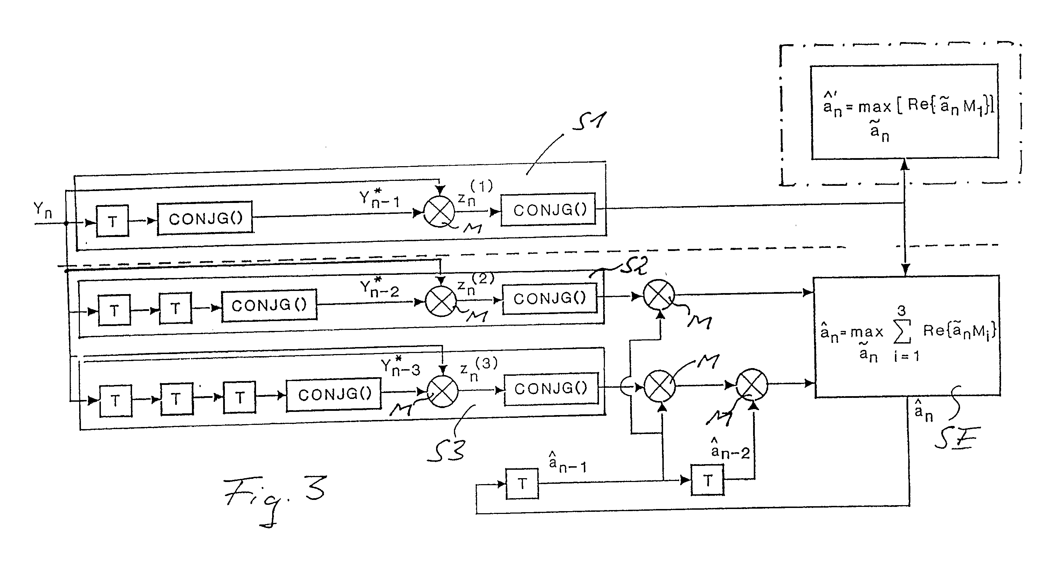

erfolgt nach Fig. 2 durch Mischung des Empfangssignals mit Referenzsignalen

$$v_c(t) = \cos(\pi kt/T - \psi_o) \qquad (8)$$

$$v_s(t) = \sin(\pi kt/T - \psi_o) \qquad (9)$$

und durch eine nachfolgende Integration über eine Symbolperiode. Die Referenzsignale $v_c(t)$ und $v_s(t)$ werden von einer AFC-(automatic frequency control) Einheit erzeugt, wobei k ganzzahlig ist ($f_c$ = k/2T) und $\psi_o$ eine beliebige, aber konstante Phasenverschiebung bedeutet. Es wird nunmehr angenommen, daß die Frequenz der Referenzsignale exakt mit der Eingangsfrequenz übereinstimmt. Für einen Real- und einen Imaginärteil von $y_n$ wird dann erhalten:

$$R_n = \int_{(n-1)T}^{nT} v_c(t) r(t)\, dt \qquad\qquad (10)$$

$$I_n = \int_{(n-1)T}^{nT} v_s(t) r(t)\, dt. \qquad\qquad (11)$$

Die Integrierer-Ausgangswerte werden analog-digital gewandelt, was in Fig. 2 im einzelnen nicht dargestellt ist, und werden im Empfänger mit einer Abtastrate von 1/T digital weiter verarbeitet.

Bei einem herkömmlichen DPSK-Empfänger erfolgt die differentiell-kohärente Demodulation mit einem

2

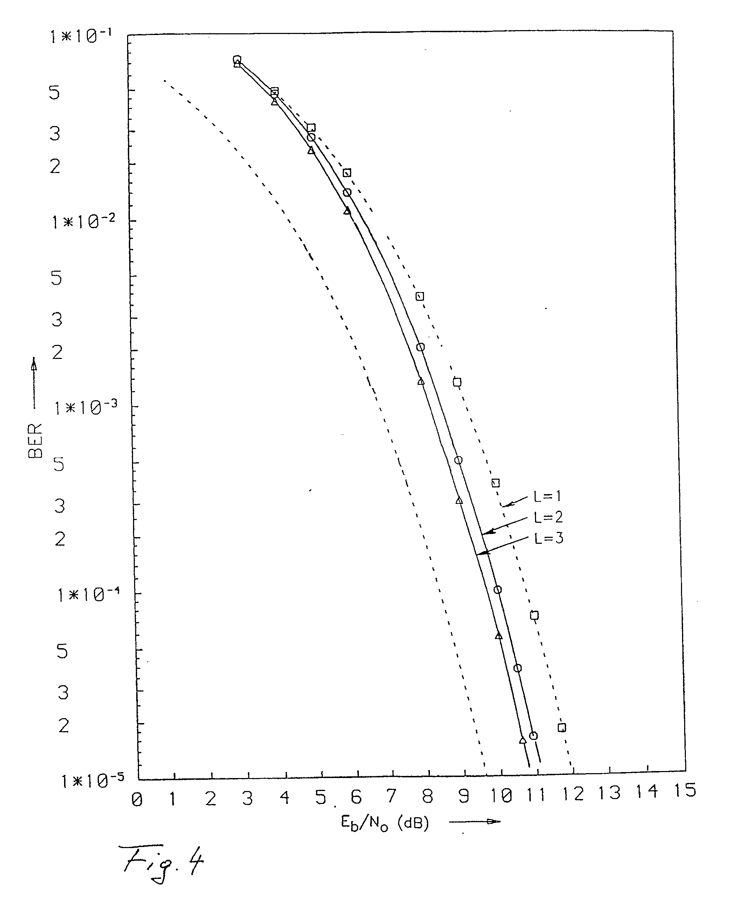

Symboldetektor erster Ordnung, was in Fig. 3 einem Bereich oberhalb der gestrichelten Linie entspricht. In dem Symboldetektor wird das konjugiert komplexe und um eine Symbolperiode verzögerte Empfangssymbol $y^*_{n-1}$ mit dem momentanen Symbol $y_n$ multipliziert. Das differentiell-kohärent demodulierte Signal am Symboldetektor-Ausgang lautet dann:

$$z_n^{(1)} = y_n y^*_{n-1} = \epsilon a_n + n_n^{(1)}, \qquad (12)$$

wobei mit dem Symbol * die Bildung des konjugiert komplexen Wertes bezeichnet ist, wofür in Fig. 3 der Block CONJG verwendet ist, $n_n^{(1)}$ nichtgauß'sches Rauschen ist, und $\epsilon = ST^2/2$ eine Konstante ist, welche nur von der Signalleistung und der Datenrate abhängt.

Bei einer quaternären Phasenumtastung (4-DPSK) erfolgt die Detektion $\widetilde{a}'_n$ des gesendeten Signals $a_n$ - (wobei mit dem Symbol eine konventionelle Detektion bezeichnet ist) durch Ermittlung jenes Entscheidungsbereichs, in den das Signal $z_n^{(1)}$ fällt. In Fig. 1 sind die vier Entscheidungsbereiche durch gestrichelte Linien eingezeichnet. Gleichbedeutend hiermit ist, jenes 4-DPSK-Symbol $a_n$ zu bestimmen, das zu $z_n^{(1)}$ den kleinsten Abstand hat, so daß gilt:

$$\hat{a}'_n = \min_{\tilde{a}} \left| z_n^{(1)} - \epsilon \tilde{a}_n \right|^2. \qquad (13)$$

Statt Gl. (13) kann auch die folgende Entscheidungsvorschrift verwendet werden:

$$\hat{a}'_n = \max_{\tilde{a}} \left\{ Re[\tilde{a}_n z_n^{(1)*}] \right\}. \qquad (14)$$

Das empfangene regenerierte Bitpaar ergibt sich aus der Zuordnung zu $\widetilde{a}'_n$ gemäß Fig. 1.

Die theoretische Bitfehler-Wahrscheinlichkeit für 4-DPSK ist gegeben durch:

$$P_b^{(4)} = Q(a,b) - \tfrac{1}{2} I_o(ab) \exp[-\tfrac{1}{2}(a^2+b^2)], \qquad (15)$$

wobei Q(ab) die Q-Funktion und $I_o$ die modififizierte Besselfunktion nullter Ordnung sind. Für a und b gilt: a $= 2.61313\ E_b/2N_o$ und b $= 1.08239\ E_b/2N_o$.

Bei binärer phasenumtastung (2-DPSK) erfolgt die Symbol- und Bitentscheidung durch einfache Ermittlung des Vorzeichens von Re $z_n^{(1)}$. Die theoretische Bitfehler-Wahrscheinlichkeit für 2-DPSK lautet

$$P_b^{(2)} = \tfrac{1}{2} \exp(-E_b/N_o) \qquad (16)$$

Die Entscheidungsvorschrift gemäß G. (14) und die zugehörigen theoretischen Bitfehlerraten gemäß Gl. (15) und (16) entsprechen der Detektion mit einem angepaßten Filter. Diese Methode ist bezüglich der Signalform optimal, berücksichtigt jedoch nicht differentielle Codierung des Sendesignals.

Aufgabe der Erfindung ist es daher, ein Verfahren zur Bitdetektion von differentiell codierten Phasenumtast-(PSK)Signalen zu schaffen, bei welchen auch bei differentieller Codierung des Sendesignals ohne nennenswerten zusätzlichen Aufwand der empfangsseitige Gewinn im Signal/Geräusch-Lei stungsverhältnis in beachtlichem Maße gesteigert und gleichzeitig die Bitfehlerrate (BER) beträchtlich verringert werden kann. Gemäß der Erfindung ist dies bei einem Verfahren nach dem Oberbegriff des Anspruchs durch die Merkmale im kennzeichnenden Teil des patentanspruchs erreicht.

Gemäß der Erfindung ist dies im wesentlichen durch eine entscheidungsgesteuerte Rückkopplung sowie mit Hilfe von L (L > 1) Symboldetektoren der Ordnungen 1,2,..L erreicht, wobei durch die zusätzlichen (L-1) Symboldetektoren mit Verzögerungen von 2,3...L Symbolperioden und auch durch die erwähnte Rückkopplung zusätzliche Information zugeführt wird, welche für die Symbol- und Bitregenerierung genutzt wird. Hierbei entspricht die Ordnung jedes Symboldetektors der Verzögerung in Vielfachen der Symbolperiode bei der differentiell-kohärenten Demodulation.

Bei einem Empfänger mit digitaler Phasenumtastung (DPSK) mit einem programmierbaren Signalprozessor ist bei einer Realisierung der Erfindung nur eine geringfügige Erweiterung der digitalen Signalverarbeitung erforderlich. Hierbei beträgt dann der Gewinn im Signal-Geräusch-Leistungsverhältnis bei einer Bitfehlerrate (BER = bit error rate) von BER = $10^{-5}$ und bei Vorsehen von drei Symboldetektoren (d.h. L = 3) für eine Vierphasen-Umtastung (4-DPSK) 1,3 dB und für eine Zweiphasen-Umtastung (2-DPSK) 0,5 dB. Aus diesem Grunde dürfte insbesondere wegen des größeren Gewinnes das erfindungsgemäße Verfahren vor allem bei der Vierphasen-Umtastung (4-DPSK) von Interesse sein.

Nachfolgend wird die Erfindung anhand einer bevorzugten Ausführungsform im einzelnen näher erläutert. Es zeigen:

Fig. 1 in einer schematischen Darstellung Vierphasen-und Zweiphasen-Umtast-Signale $a_n$ in der komple-

xen Ebene;

Fig. 2 ein Blockschaltbild zur Erzeugung von zeitdiskreten, komplexen Phasenumtast-(PSK)-Basisbandsignalen in einem Empfänger,

Fig. 3 in Form eines Blockschaltbilds eine Schaltung zur Detektion ($\hat{a}_n$) eines Phasenumtast-(PSK-)Symbols $a_n$ mit Hilfe des erfindungsgemäßen Verfahrens mit insgesamt drei (L = 3) Symboldetektoren der Ordnungen 1, 2 und 3, wobei durch einen strichpunktiert eingerahmten Block ein mittels einer herkömmlichen Methode durchgeführter Symbolentscheid $\tilde{a}$ n) angedeutet ist.

Fig. 4 eine Kurvendarstellung, in welcher auf der Ordinate die Bitfehlerrate (BER) und auf der Abszisse das Bitenergie/Geräuschleistungsdichte-Verhältnis ($E_b/N_o$) bei einer kohärenten Vierphasenumtastungs(4-DPSK)Modulation mit einem herkömmlichen Verfahren und mit dem erfindungsgemäßen Verfahren aufgetragen sind und

Fig. 6 eine der Fig. 4 entsprechende Kurvendarstellung der Bitfehlerrate bei einer Zweiphasenumtast(2-DPSK) Modulation mit einer herkömmlichen Methode und mit dem erfindungsgemäßen Verfahren aufgetragen sind.

Wie bereits vorstehend in Verbindung mit Fig. 2 ausgeführt ist, setzt sich ein zeitdiskretes Basisbandsignal $y_n$ im komplexen Basisband aus einem Realteil Rn und einem Imaginärteil $I_n$ zusammen, d.h. es ergibt sich das bereits vorstehend in Gl. (7) angegebene zeitdiskrete Basisbandsignal $y_n = R_n + jI_n$, welches durch die Mischung eines Eingangssignals mit Referenzsignalen entstanden ist, wie im einzelnen vorstehend in den Gl.'en (8) und (9) angegeben ist. Anschließend erfolgt eine Integration über eine Symbolperiode; die durch die Integration erhaltenen Ausgangswerte werden analog-digital gewandelt und mit einer Abtastrate von 1/T im Empfänger digital weiter verarbeitet, wobei die vorstehend aufgeführten Schritte ab der Integration in dem Blockschaltbild der Fig. 2 im einzelnen nicht gesondert dargestellt sind.

In Fig. 3 ist unterhalb der im oberen Drittel eingezeichneten, gestrichelten Linie eine Erweiterung eines herkömmlichen DPSK-Detektors dargestellt, wobei eine Bitdetektion gemäß der Erfindung in dem Ausführungsbeispiel mit 3 (L = 3) Symboldetektoren S1 bis S3 wiedergegeben ist. Hierbei unterscheiden sich die einzelnen Symboldetektoren S1 bis S3 lediglich durch die Anzahl der Zeitglieder T, in welchen das Signal jeweils um eine (1) Symbolperiode verzögert wird.

Das Signal am Ausgang des Signaldetektors S1, d.h. eines Signaldetektors erster Ordnung, das bereits in Gl. (12) wiedergegebene differentiell-kohärent demodulierte Signal $z_n^{(1)}$, ist bereits durch ein Zeitglied T um eine Symbolperiode verzögert.

Das Signal am Ausgang des Symboldetektors S2, d.h. eines Symboldetektors zweiter Ordnung, bei welchem als Phasendifferenz über zwei Zeitglieder T das um zwei (2) Symbolperioden verzögerte Signal benutzt wird, lautet dann:

$$Z_n^{(2)} = y_n y_{n-2}^* = \epsilon a_n a_{n-1} + n_n^{(2)}. \qquad (17)$$

wobei $n_n^{(2)}$ wiederum den Rauschterm beschreibt. Dementsprechend wird erhalten für den Symboldetektor S3, d.h. für einen Symboldetektor dritter Ordnung

$$Z_n^{(3)} = y_n y_{n-3}^* = \epsilon a_n a_{n-1} a_{n-2} + n_n^{(3)} \qquad (18)$$

und für den Detekor L-ter Ordnung

$$Z_n^{(L)} = y_n y_{n-L}^* = \epsilon a_n a_{n-1} \dots \alpha_{n-L+1} + n_n^{(L)} \qquad (19)$$

Die Rauschterme $n_n^{(1)}$, $n_{nn}^{(2)}$,..... $n_n^{(L)}$ sind nichtgaußisch und mit einander korreliert.

Ein Symbolentscheid $\hat{a}_n$ gemäß der Erfindung erfolgt nun dadurch, daß die bereits detektierten Symbole $\hat{a}_{n-1}$, $\hat{a}_{n-2}$,... $\hat{a}_{n-L+1}$ über eine der Ordnung des jeweiligen Symboldetektors S2 bis SL entsprechende Anzahl von Zeitgliedern T sowie nachgeordneten Multiplizierern M rückgekoppelt werden, und jenes Symbol

$$\tilde{a}_n$$

ermittelt wird, für welches die Summe der quadratischen Abstände

$$|z_n^{(j)} - \hat{\epsilon}_n \hat{a}_{n-1} \hat{a}_{n-2} \cdots \hat{a}_{n-j+1}|^2, \qquad j = 2,3\dots L$$

der L Symboldetektoren ein Minimum ist. Die Minimierung dieser Abstände bedeutet in anschaulicher Weise, daß jenes Phasenumtast-(PSK-) Symbol $a_n$ gesucht wird, für welches die Summe der quadratischen "Fehler" am Ausgang der L Symboldetektoren ein Minimum annimmt.

Für L Symboldetektoren der Ordnungen j = 1,2,...,L lautet somit die Entscheidungsvorschrift für das

Symbol $a_n$

$$\hat{a}_n = \min_{\bar{a}_n}\{|z_n^{(1)} - \epsilon\bar{a}_n|^2 + |z_n^{(2)} - \epsilon\bar{a}_n\hat{a}_{n-1}|^2 + \cdots \quad (20)$$
$$+ \ |z_n^{(L)} - \epsilon\bar{a}_n\hat{a}_{n-1}\hat{a}_{n-L+1}|^2\}$$

oder auch

$$\hat{a}_n = \max_{\bar{a}_n}\{Re[\bar{a}_n z_n^{(1)*}] + Re[\bar{a}_n\hat{a}_{n-1} z_n^{(2)*}] + \cdots \quad (21)$$
$$+ \ Re[\bar{a}_n\hat{a}_{n-1}\cdots\hat{a}_{n-L+1} z_n^{(L)*}]\}.$$

Der herkömmliche Detektor nach G1.(14) ist somit für L = 1 ein Spezialfall des erfindungsgemäßen Verfahrens. Bei der Schaltungsanordnung eines Detektors nach Fig. 3 mit 3(L=3) Symboldetektoren lautet daher die Entscheidungsvorschrift

$$\hat{a}_n = \max_{\bar{a}_n}\{Re[\bar{a}_n z_n^{(1)*}] + Re[\bar{a}_n\hat{a}_{n-1} z_n^{(2)*}] + Re[\bar{a}_n\hat{a}_{n-1}\hat{a}_{n+2} z_n^{(3)*}]\}. \quad (22)$$

Die mit Hilfe des erfindungsgemäßen Verfahrens erzielbaren Verbesserungen wurden durch Monte Carlo-Rechnersimulationen ermittelt. Gleichzeitig wurden zur Überprüfung der Simulation die durch die Simulation erhaltenen Ergebnisse mit exakten, analytischen Berechnungen verglichen. Sowohl bei der Simulation wie auch bei den theoretischen Untersuchungen wurden eine perfekte Frequenz- und Symboltaktsynchro nisation angenommen.

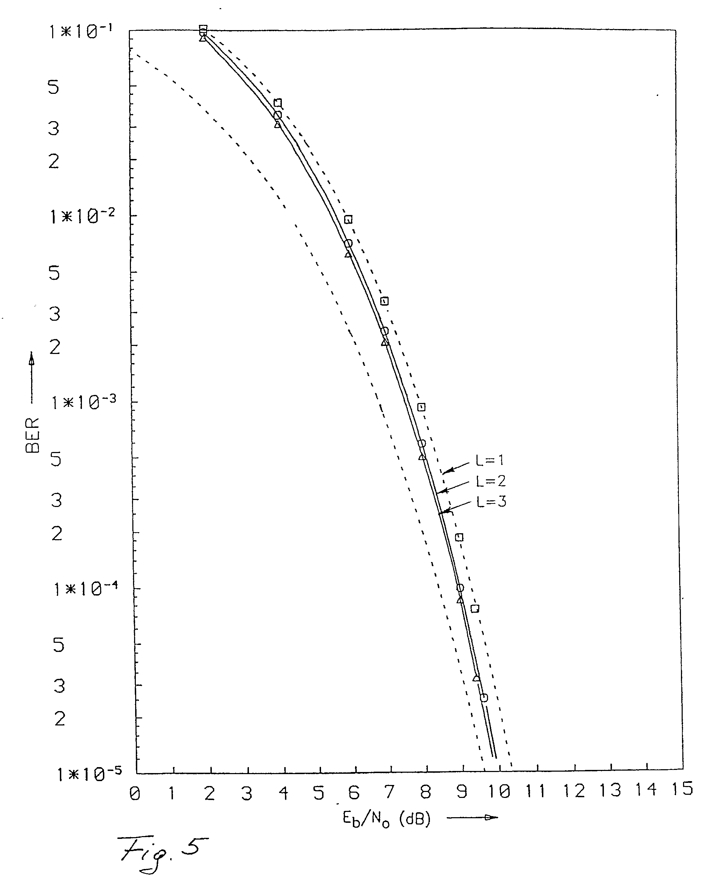

Die Ergebnisse für eine Vierphasenumtastung (4-DPSK) und für eine Zweiphasen-Umtastung (2-DPSK), sind in Fig. 4 und und 5 im einzelnen dargestellt. Hierbei entspricht der am weitesten links angeordnete, gestrichelt wiedergegebene Kurvenverlauf einer kohärenten Vierphasen-Umtastung (4-PSK), während der am weitesten rechts angeordnete, ebenfalls gestrichelt wiedergegebene Kurvenverlauf der herkömmlichen Methode mit einem (L=1) Signaldetektor entspricht. Ferner ist aus der Kurvendarstellung zu erkennen, daß bei Vorsehen von 3 (L=3) Symboldetektoren bei einer Vierphasen-Umtastung (4-DPSK) und einer Bitfehlerrate von BER = $10^{-5}$ ein Leistungsgewinn von ca. 1,3 dB erzeugt wird. Wie aus Fig. 5 ersichtlich ist, beträgt der entsprechende Gewinn bei einer Zweiphasen-Umtastung (2-DPSK) 0,5 dB. Damit wird bei einer Zweiphasen-Umtastung (2-DPSK) gemäß der Erfindung nur etwa 0,3 dB mehr Signalenergie als bei der optimalen kohärenten 2-PSK-Modulation benötigt. In der Praxis dürften im allgemeinen kaum mehr als drei Symboldetektoren verwendet werden, da die zusätzlich erreichbare Verbesserung gering ist und eine Phasenkonstanz über eine noch größere Anzahl von Symbolperioden häufig nicht mehr gewährleistet ist.

Fig. 3 ist lediglich eine prinzipielle Darstellung der Erfindung; jedoch kann das Blockschaltbild der Fig. 3 ohne weiteres auch noch vereinfacht werden. So wird beispielsweise der Symbolentscheid für $\hat{a}_n$ nicht beeinflußt, d.h. er bleibt unverändert, wenn in Fig. 3 alle CONJG-Glieder entfernt werden und in den ersten Multipliziereinheiten M das das Basisband-Eingangssignal $y_n$ durch dessen konjugierten Wert $y_n^*$ ersetzt wird.

Für eine Vier- bzw. Zweiphasen-Umtastung konnte vom Erfinder analytisch das folgende, theoretisch interessante Ergebnis hergeleitet werden. Bei einer Bitdetektion nach dem erfindungsgemäßen Verfahren wird mit unendlich vielen Symboldetektoren (d.h. L→ ∞) bei einer fehlerfreien Rückkopplung die Bitfehlerrate von kohärenter 4-PSK- oder 2-PSK-Modulation erreicht.

Eine Bitdetektion gemäß dem erfindungsgemäßen Verfahren kann in einem herkömmlichen DPSK-Empfänger auf einfache Weise realisiert werden. Hierbei können die zeitdiskreten, komplexen Basisband-Empfangssignale $y_n$, wie vorstehend anhand von Fig. 2 kurz beschrieben worden ist, mit Hilfe analoger Schaltungen wie bei einem herkömmlichen DPSK-Empfänger gewonnen werden. Anstelle der Integriereinheiten können jedoch auch Tiefpässe verwendet werden, durch welche die doppelte Trägerfrequenz-Komponente ausgefiltert wird. Die Verarbeitung der Abtastwerte $y_n$ erfolgt dann wie in Fig. 3 dargestellt, mit Hilfe einer speziellen digitalen Schaltung digital oder sie kann auch mittels eines digitalen, programmierbaren Signalprozessors erfolgen.

Die DSPK-Modulation mit einer differentiell-kohärenten Demodulation ist wegen ihrer Robustheit ein bewährtes Modulationsverfahren für Fadingkanäle und somit beispielsweise beim Mobilfunk anwendbar. Wegen der schnellen Akquisition und der einfachen schaltungstechnischen Realisierbarkeit wird die DPSK-Modulation häufig auch in Satelliten-TDMA-Systemen (TDMA = time division multiple access) und in regenerierenden d.h. demodulierenden Satellitentranspondern benutzt.

Von besonderer Bedeutung ist das erfindungsgemäße Verfahren für Übertragungssysteme, bei welchen Beschränkungen in der Signalleistung eine Rolle spielen. Dies ist in ganz besonderem Maße bei Satellitensystemen der Fall. Der bei dem erfindungsgemäßen Verfahren erzielbare Gewinn von 1.3 dB bei Vierphasen-Umtastungen (4-DPSK) mit drei Symboldetektoren und einer Bitfehlerrate BER = $10^{-5}$ bedeutet, daß bei gleicher Transponder-Sendeleistung die Anzahl der Satellitenkanäle um ein Drittel (1/3) erhöht (FDMA) werden kann, oder daß die Fläche eines Parabolspiegels einer Erdfunkstelle um ein Drittel (1/3) reduziert werden kann, was wiederum eine erhebliche Kostenersparnis ergibt.

## Ansprüche

Verfahren zur empfangsseitigen Bitdetektion von differentiell kodierten, binären oder quaternären PSK-Signalen bei differentiell-kohärenter Demodulation, dadurch **gekennzeichnet**, daß
empfangene, aufbereitete Signale ($y_n$) parallel L Symboldetektoren (S1 bis SL) der Ordnung j (j = 1,2,3..L; (L > 1)) zugeführt werden;
die um j Symbolperioden verzögerten, konjugiert komplexen Signale ($y^*_{n-1}$, $y^*_{n-2}$,... $Y^*_{n-L}$) und die unveränderten aufbereiteten Eingangssignale ($y_n$) zu nicht-quantisierten Ausgangswerten $z_n^{(j)}$ der L Symboldetektoren in Multipliziergliedern (M) multipliziert und anschließend komplex konjugiert werden;
durch Zeitglieder (T) verzögerte, bereits detektierte, regenerierte PSK-Symbole ($\hat{a}_{n-1}$, $\hat{a}_{n-2}$,... $\hat{a}_{n-L+1}$) entsprechend rückgekoppelt werden, und
ein Symbol ($a_n$) ermittelt wird, für welches die Summe der quadratischen Abstände ($|z_n^{(j)}-a_n\hat{a}_{n-1}\hat{a}_{n-2}....\hat{a}_{n-j+1}|^2$ mit j = 2,3,...L)der L Symboldetektoren ein Minimum annimmt.

Fig. 1

Fig. 2

Fig. 3

8

Fig. 4

Fig. 5